# EUROPÄISCHE PATENTSCHRIFT

(11) **EP 3 030 446 B1**
(45) Veröffentlichungstag und Bekanntmachung des Hinweises auf die Patenterteilung: **10.10.2018**
(21) Anmeldenummer: 14750441.9
(22) Anmeldetag: 07.08.2014
(51) Int. Cl.: B60K 37/06, G01C 21/36

(54) **ORTSVERÄNDERLICHE DARSTELLUNG VON INFORMATIONEN IM KRAFTFAHRZEUG**
MOVABLE DISPLAY OF INFORMATION IN A MOTOR VEHICLE
REPRÉSENTATION, SE MODIFIANT SELON LE LIEU, D'INFORMATIONS DANS UN VÉHICULE AUTOMOBILE

(30) Priorität: 09.08.2013 DE 102013013326
(43) Veröffentlichungstag der Anmeldung: 15.06.2016
(73) Patentinhaber: Audi AG, 85045 Ingolstadt (DE)
(72) Erfinder: MAYER, Stefan, 85080 Gaimersheim (DE); ULLMANN, Christine, 24784 Westerrönfeld (DE); SPRICKMANN KERKERINCK, Paul, 85051 Ingolstadt (DE)
(74) Vertreter: Brandt, Kai
(86) Internationale Anmeldenummer: PCT/EP2014/002169
(87) Internationale Veröffentlichungsnummer: WO 2015/018525

(56) Entgegenhaltungen:
- US-A1- 2007 085 708

## Beschreibung

Die Erfindung betrifft ein Kraftfahrzeug mit zumindest einer Anzeigeeinrichtung, z.B. einem Bildschirm, und mit zumindest zwei Anwendungen, von denen jede z.B. eine Software-Applikation sein kann. Die Anwendungen erzeugen nacheinander aus einem Informationsdatensatz einen Anzeigeinhalt und stellen jeweils ihren Anzeigeinhalt mittels der zumindest einen Anzeigeeinrichtung in einem Bereich des Fahrgastraumes dar. Die Anwendungen tauschen den Informationsdatensatz untereinander aus, d.h. es erscheint nacheinander in den unterschiedlichen Bereichen des Fahrgastraumes eine Information aus demselben Informationsdatensatz.

Ein typischer Anwendungsfall dieser Art ist das Anzeigen einer Warnmeldung in einem Kraftfahrzeug. So kann vorgesehen sein, dass zunächst in einem Kombiinstrument hinter einem Lenkrad z.B. ein rot leuchtendes Warnsymbol angezeigt wird, falls z.B. eine Temperatur eines Motoröls größer als ein Schwellwert ist. Das Erzeugen dieses Warnsymbols kann durch eine erste, für einen Bildschirm des Kombiinstruments zuständige Anwendung erfolgen.

Um dem Fahrer genauere Informationen über das Problem bereitzustellen, kann dann eine Anwendung zum Steuern des Kombiinstruments einen Informationsdatensatz mit der Warnmeldung z.B. an eine Anwendung für einen Bildschirm in der Mittelkonsole des Kraftwagens bereitstellen. Diese zweite Anwendung kann z.B. Bestandteil des Infotainmentsystems des Kraftfahrzeugs sein. Die zweite Anwendung kann dann auf dem Bildschirm der Mittelkonsole z.B. einen Text mit einem ausführlichen Warnhinweis darstellen. Hierzu werden dann in der Regel wieder Signalfarben, also z.B. wieder rot leuchtende Buchstaben, verwendet.

Aus der Sicht eines Fahrers kann dies aber bedeuten, dass er während einer Fahrt kurz nacheinander, also z.B. in einem zeitlichen Abstand von einer Sekunde, zwei rot leuchtende Warnhinweise wahrnimmt, nämlich einen im Kombiinstrument und einen auf der Mittelkonsole. Wendet er dann den Blick vom Verkehrsgeschehen ab, vergeudet er wertvolle Zeit, um festzustellen, dass beide Warnhinweise dieselbe Warnmeldung betreffen, nämlich in dem Beispiel die hohe Temperatur. Sein Blick ist damit unnötig lange vom Verkehrsgeschehen abgewendet.

Ein anderer Anwendungsfall ist das Einstellen eines Fahrziels an einem Navigationsassistenzsystem und die anschließende Anzeige von Fahrhinweisen z.B. im Head-up-Display des Kraftfahrzeugs. Der Fahrer wählt an einem Bildschirm ein neues Fahrziel aus und quittiert die Auswahl. Hierzu kann ihm eine erste Anwendung, z.B. ein Steuerprogramm des Infotainmentsystems, ein entsprechendes Bedienmenü auf dem Bildschirm anzeigen. Auf dem Head-up-Display wird dem Fahrer dann durch eine zweite Anwendung z.B. ein Pfeil für das nächste Fahrmanöver, also z.B. Geradeausfahrt oder rechts Abbiegen, dargestellt. Der Fahrer kann sich dabei aber nicht sicher sein, ob der angezeigte Pfeil schon zur Navigation zu seinem neuen Fahrziel gehört oder ob noch das alte Fahrziel zugrunde gelegt ist, weil z.B. noch die Routeberechnung für das neue Fahrziel läuft.

Das Dokument US 2007/085708 A1 offenbart, dass bei Einschalten eines Schalters zum Anzeigen eines Bildes auf einer Anzeigevorrichtung, die Anzeigevorrichtung zunächst ein Zeigerbild von Messbildern und ein Warnindikatorbild anzeigt. Das Zeigerbild wird für eine spezifische Zeitperiode angezeigt und dann wird ein Wählbild angezeigt. Nach Anzeigen des Wählbilds für eine spezifische Zeitperiode, zeigt die Anzeigevorrichtung ein Navigationsbild an.

Im Stand der Technik gibt es damit das Problem, dass einem Fahrer nicht ersichtlich ist, ob die von unterschiedlichen Anwendungen eines Kraftfahrzeugs angezeigten Informationen zusammengehören, d.h. ob sich die Anwendungen synchronisiert haben. Es mangelt also an Systemtransparenz.

Der Erfindung liegt die Aufgabe zugrunde, in einem Kraftfahrzeug eine Möglichkeit bereitzustellen, um den synchronen Betrieb zweier Anwendungen signalisieren zu können.

Die Aufgabe wird durch die Gegenstände der unabhängigen Patentansprüche gelöst. Vorteilhafte Weiterbildungen der Erfindung sind durch die Unteransprüche gegeben.

Das erfindungsgemäße Kraftfahrzeug weist zumindest eine Anzeigeeinrichtung auf, auf welcher Anwendungen graphische Informationen in einem Fahrgastraum des Kraftfahrzeugs anzeigen können. Eine Anzeigeeinrichtung kann z.B. ein Bildschirm sein. Die Menge aus der zumindest einen Anzeigeeinrichtung kann insbesondere zumindest eines aus den folgenden Elementen umfassen: ein Kombiinstrument, ein Scheibenwurzeldisplay, einen Bildschirm in einer Mittelkonsole, einen Bildschirm in einem Armaturenbrett, ein Head-up-Display. Ein Scheibenwurzeldisplay ist ein an sich aus dem Stand der Technik bekannter streifenförmiger Bildschirm, der unterseitig einer Windschutzscheibe bereitgestellt ist und eine Längserstreckung in Fahrzeugquerrichtung von mindestens einem Drittel, insbesondere mindestens der Hälfe, der Scheibenbreite aufweist.

Die genannten Anwendungen können jeweils ein Steuergerät und/oder ein Programmmodul eines Steuergeräts oder einer zentralen Recheneinrichtung oder eines Infotainmentsystems umfassen. Jede Anwendung erzeugt jeweils Graphikdaten, also Steuerdaten zum Festlegen der auf der zumindest einen Anzeigeeinheit angezeigten graphischen Information, d.h. zum Festlegen ihres Anzeigeinhalts.

Ihre Anzeigeinhalte erzeugen die Anwendungen aus einem Informationsdatensatz, also aus einer vorbestimmten Menge aus einem oder mehreren computerlesbaren digitalen Werten und/oder Zeichen. Diesen Informationsdatensatz tauschen die Anwendungen gemäß einer Ausführungsform der Erfindung aus, d.h. eine der Anwendungen sendet den Informationsdatensatz an zumindest eine andere Anwendung. Alternativ dazu kann auch vorgesehen sein, dass sich die Anwendungen gegenseitig auf den Informationsdatensatz hinweisen, d.h. eine der Anwendungen sendet an zumindest eine andere Anwendung Hinweisdaten, welcher Informationsdatensatz dem Anzeigeinhalt zugrunde gelegt werden soll. Dann kann der Informationsdatensatz in einem gemeinsam für alle Anwendungen zugänglichen Speicher gespeichert sein oder von einer für alle Anwendungen zugänglichen Datenquelle erzeugt und aktualisiert werden, z.B. von einem Steuergerät. Insgesamt synchronisieren sich also die Anwendungen durch das Austauschen des Informationsdatensatzes oder das Hinweisen auf den Informationsdatensatz.

Da alle Anzeigeinhalte auf demselben Informationsdatensatz beruhen, wird also zunächst durch eine der Anwendungen aus dem Informationsdatensatz ein erster Anzeigeinhalt erzeugt und dargestellt und dann durch eine andere der Anwendungen aus dem Informationsdatensatz ein zweiter Anzeigeinhalt erzeugt und in einem anderen Bereich im Fahrgastraum darstellt. Wie bereits beschrieben taucht hierdurch z.B. zur selben Warnmeldung (Informationsdatensatz) ein Warnsymbol (erster Anzeigeinhalt) im Kombiinstrument und dann ein Text als Warnhinweis (zweiter Anzeigeinhalt) im Bildschirm der Mittelkonsole auf. Der Informationsdatensatz muss hierbei nicht statisch, also unveränderlich sein. Er kann auch z.B. durch Sensordaten von Sensoren des Kraftfahrzeugs und/oder durch Daten z.B. aus dem Internet oder einer anderen fahrzeugexternen Datenquelle aktualisiert werden.

Damit dem Fahrer hierbei nun klar wird, dass die beiden in unterschiedlichen Bereichen des Fahrgastraumes angezeigten Anzeigeinhalte zusammengehören, ist erfindungsgemäß eine Signalisierungseinrichtung vorgesehen, welche dazu ausgelegt ist, zumindest ein optisches Signal in dem Fahrgastraum zu erzeugen, welches das Austauschen des Informationsdatensatzes signalisiert. Durch das optische Signal wird also sichtbar, dass zwei Anwendungen ihren Anzeigeninhalt gerade synchronisiert haben.

Die Anwendungen können ihre Anzeigeinhalte auf einer gemeinsamen Anzeigeeinrichtung ausgeben. Insbesondere für diesen Fall sieht eine Ausführungsform der Erfindung vor, dass die Signalisierungseinrichtung ein Leuchtsymbol umfasst, das zum Erzeugen eines optischen Signals aufleuchtet und/oder blinkt und/oder seine Leuchtfarbe ändert. Das Leuchtsymbol kann dann z.B. durch ein Icon auf einem Bildschirm realisiert sein oder aber auch durch eine Lampe, z.B. eine Leuchtdiode.

Ein weiterer Vorteil ergibt sich, wenn die Signalisierungseinrichtung dazu ausgelegt ist, eine sich im Fahrgastraum bewegende Leuchterscheinung zu erzeugen, welche durch ihre Bewegung diejenige Richtung anzeigt, wohin der Informationsdatensatz ausgetauscht wird. Dann ist zugleich signalisiert, dass sich in Bewegungsrichtung die aktuellere und/oder umfangreichere Information befindet.

Das Signalisieren des Datenaustauschs zwischen zwei Anwendungen ist insbesondere dann wünschenswert, falls zumindest zwei baulich voneinander getrennt angeordnete Anzeigeeinrichtungen bereitgestellt sind und die Anwendungen ihre Anzeigeinhalte auf jeweils einer anderen der Anzeigeeinrichtung anzuzeigen ausgelegt sind. In dem oben beschriebenen Beispiel von der Navigationsassistenz kann dem Fahrer als optisches Signals für die Synchronisierung z.B. nach der Berechnung der Fahrroute z.B. ein sich bewegendes Symbol angezeigt werden, das sich von dem Bildschirm des Navigationsassistenzgeräts hin zu dem Head-up-Display bewegt. Dann ist dem Fahrer klar, dass die Routenberechnung beendet ist und dass der auf dem Head-up-Display angezeigte Pfeil die Fahrroute zu dem neuen Fahrziel betrifft.

Um hierbei eine Leuchterscheinung auch zwischen den Anzeigeeinrichtungen erzeugen zu können, also in einem Bereich, wo sich gar kein Bildschirm befindet, sieht eine Ausführungsform der Erfindung eine Signalisierungseinrichtung vor, die mehrere, in einer Reihe zwischen zwei Anzeigeeinrichtungen angeordnete Lampen umfasst und dazu ausgelegt ist, die Lampen der Reihe nach einzuschalten und/oder auszuschalten. Hierdurch kann ein Lauflicht erzeugt werden, das die Richtung des Datenaustausches angibt.

Noch flexibler in der Erzeugung des optischen Signals ist eine Ausführungsform der Erfindung, bei welcher die Signalisierungseinrichtung eine Projektionseinrichtung umfasst, welche dazu ausgelegt ist, einen Lichtpunkt und/oder ein Leuchtsymbol auf eine Oberfläche in dem Fahrtgastraum zu projizieren. Die Projektionseinrichtung kann einen Laser oder eine Lampe mit einer Blende umfassen.

Eine Ausführungsform der Erfindung nutzt eine der vorhandenen Anzeigeeinrichtungen, um das optische Signal zu erzeugen. Hierbei umfasst die Signalisierungseinrichtung ein Scheibenwurzeldisplay und ist dazu ausgelegt, eine ortsveränderliche Leuchterscheinung, also z.B. ein sich bewegendes Symbol, auf dem Scheibenwurzeldisplay zu erzeugen, welches eine Richtung, in welche der Datensatz ausgetauscht wird, signalisiert.

Genauso ist es möglich, dass die Signalisierungseinrichtung dazu ausgelegt ist, auf der zumindest einen Anzeigeeinrichtung ein einfaches graphisches Symbol zu erzeugen, also z.B. einen Pfeil oder ein sich zwischen den Anzeigeinhalte der beiden Anwendungen bewegendes Symbol.

Gemäß einer Ausführungsform der Erfindung ist bei dem Kraftwagen eine Konfigurationseinrichtung vorgesehen, die dazu ausgelegt ist, das Synchronisieren aller Anwendungen oder einiger oder einer vorgegebener der Anwendungen in Abhängigkeit von einer Benutzereingaben wahlweise zu blockieren oder freizugeben. Der Benutzer kann also den Datenaustausch zwischen den Anwendungen abstellen oder anstellen. Hierdurch ist dem Benutzer die Möglichkeit gegeben, selbst festzulegen, wo und durch welche Anwendungen im Fahrgastraum bestimmte Informationen angezeigt werden.

Das erfindungsgemäße Kraftfahrzeug ist bevorzugt als Kraftwagen, insbesondere als Personenkraftwagen, realisiert.

Insgesamt wird die Erfindung auch durch ein Verfahren zum Symbolisieren des Datenaustausches zwischen zumindest zwei Anwendungen realisiert, von denen zunächst eine der Anwendungen aus einem Informationsdatensatz Graphikdaten erzeugt und auf zumindest einer Anzeigeeinrichtung eines Kraftfahrzeugs darstellt und dann eine andere der Anwendungen aus dem Informationsdatensatz Graphikdaten erzeugt und auf zumindest einer Anzeigeeinrichtung darstellt, wobei die Anwendungen zur Synchronisation den Informationsdatensatz in der beschriebenen Weise untereinander austauschen oder sich gegenseitig auf den Informationsdatensatz hinweisen. Durch eine Signalisierungseinrichtung wird in einem Fahrgastraum des Kraftfahrzeugs zumindest ein optisches Signal erzeugt wird, welches das Synchronisieren signalisiert. Zusätzlich oder alternativ zu einem optischen Signal kann allgemein bei der Erfindung auch ein akustisches Signal vorgesehen sein. Dieses akustische Signal ist insbesondere dann geeignet, wenn ein Nutzer mit ihm ein "Wandern" eines akustischen Phänomens, z.B. eines Tons oder Geräuschs, von einer zur anderen Anzeigeeinrichtung wahrnehmen kann. Dies kann z.B. durch eine Lautstärke- und/oder Phasensteuerung von zwei oder mehr als zwei Lautsprechern realisiert werden. Diese Methode ist auch als "Panning" bekannt. Insbesondere ist bei dem optischen und/oder akustischen Signal also ein Ortsbezug für einen Nutzer herstellbar, um die zusammengehörigen Anzeigeinhalte orten zu können.

Die Erfindung umfasst auch Weiterbildungen dieses Verfahrens, welche Merkmale aufweisen, wie sie bereits im Zusammenhang mit den Weiterbildungen des erfindungsgemäßen Kraftfahrzeugs beschrieben wurden. Aus diesem Grunde unterbleibt hier eine Beschreibung der entsprechenden Weiterbildungen des erfindungsgemäßen Verfahrens.

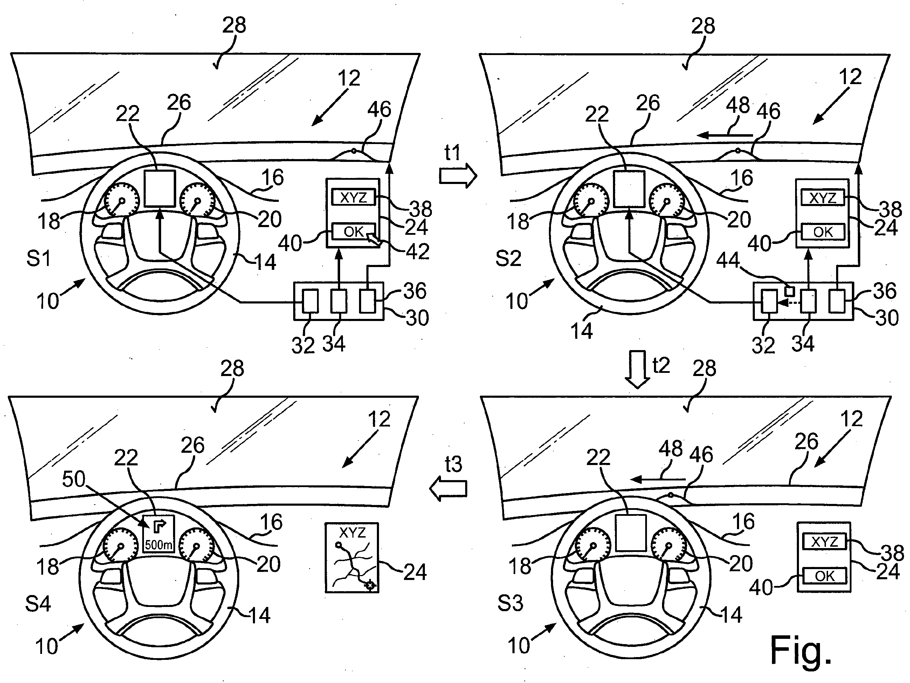

Im Folgenden ist die Erfindung noch einmal anhand eines Ausführungsbeispiels erläutert. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt eine Bildsequenz zu vier Schritten S1 bis S 4 einer Ausführungsform des erfindungsgemäßen Verfahren, das von einem Kraftfahrzeug 10 durchgeführt wird. Dargestellt ist jeweils von dem Kraftfahrzeug 10 ein Teil von dessen Fahrgastraum 12 aus der Sicht eines (nicht dargestellten) Fahrers des Kraftfahrzeugs 10. Hinter einem Lenkrad 14 kann ein Kombiinstrument 16 mit z.B. einem Tachometer 18 und einer Drehzahlanzeige 20 angeordnet sein. Das Kraftfahrzeug 10 kann ein Kraftwagen, insbesondere ein Personenkraftwagen, sein.

Das Kraftfahrzeug 10 kann in dem gezeigten Beispiel in an sich bekannter Weise drei Bildschirme aufweisen, nämlich ein Kombianzeige 22 im Kombiinstrument 16 zwischen dem Tachometer 18 und der Drehzahlanzeige 20, einen Mittelkonsolenbildschirm 24 in einer (nicht näher dargestellten) Mittelkonsole des Kraftwagens 10 und ein Scheibenwurzeldisplay 26, das unterhalb eine frontalen Windschutzscheibe 28 und in Fahrzeuglängsrichtung aus Sicht des Fahrers hinter dem Kombiinstrument 16 angeordnet ist. Ein Anzeigeinhalt der drei Bildschirme 22, 24, 26 kann zum Beispiel durch eine zentrale Recheneinrichtung 30 gesteuert sein. Der Anzeigeinhalt wird hierbei durch Graphikdaten festgelegt, welche z.B. graphische Steuerbefehle für Controller des jeweiligen Bildschirms und Bilddaten mit Bitmaps umfassen können. Die Graphikdaten bilden jeweils einen Anzeigeinhalt für einen Bereich zumindest eines der Bildschirme 22, 24, 26. Die Graphikdaten können z.B. in an sich bekannter Weise durch Steuerprogramme oder Applikationen 32, 34, 36 erzeugt werden, die von der Recheneinrichtung 30 ausgeführt werden. In dem gezeigten Beispiels erzeugt die Applikation 32 einen Anzeigeinhalt für die Kombianzeige 22, die Applikation 34 einen Anzeigeinhalt für den Mittelkonsolenbildschirm 24 und die Applikation 36 einen Anzeigeinhalt für das Scheibenwurzeldisplay 26. Es kann aber auch vorgesehen sein, dass zwei oder sogar mehr als zwei Applikationen Anzeigeinhalte für unterschiedliche Bereiche desselben Bildschirms erzeugen.

In dem gezeigten Beispiel kann der Fahrer im Schritt S1 z.B. ein Fahrziel XYZ für eine Navigationsassistenz festlegen, indem er auf dem Mittelkonsolenbildschirm 24 in einem Eingabefeld 38 den Namen des Fahrziels XYZ festlegt und anschließend z.B. durch Betätigen eines Bedienfeldes 40, also z.B. durch Anklicken des Bedienfeldes 40 mit einem Zeiger 42, die Routenberechnung zu dem Fahrziels XYZ aktiviert. Das Anzeigen des Eingabefeldes 38 und des Bedienfeldes 40 sowie das Erkennen der Bedienung mit dem Mauszeiger 42 wird durch die Applikation 34 in herkömmlicher Weise durchgeführt.

Um den Fahrer zu dem Fahrziel XYZ zu leiten, sollen in an sich bekannter Weise Navigationshinweise, z.B. ein Pfeil zur Angabe des nächsten Fahrmanövers, in der Kombianzeige 22 durch die Applikation 32 dargestellt werden.

Hierzu kann die Applikation 34 nach Fertigstellung der Routenberechnung zu einem Zeitpunkt t1 in dem Schritt S2 ein Informationspaket 44 an die Applikation 32 senden. Das Informationspaket 44 kann z.B. eine Liste mit den anzuzeigenden Fahrmanövern umfassen, d.h. das Informationspaket 44 umfasst dann einen vollständigen, zu dem Fahrziel XYZ gehörenden Informationsdatensatz, aus welchem durch die Applikation 32 ein Anzeigeinhalt für die Anzeige auf der Kombianzeige 22 erzeugt werden sollen. Das Informationspaket 44 kann aber auch z.B. nur einen Hinweis z.B. in Form einer Identifikationsnummer umfassen, über welche die Applikation 32 dann den eigentlichen Informationsdatensatz von einem Speicherort abrufen kann.

Der Datenaustausch erfolgt im Verborgenen. Für den Benutzer ist es so zunächst nicht ersichtlich, aus welcher Quelle neue Daten kommen. Die Anwendungen werden in unterschiedlichen Displaybereichen oder unterschiedlichen Displays (Kombiinstrument. Scheibenwurzeldisplay, Mittendisplay) dargestellt.

Damit der Fahrer bei Erscheinen des ersten Fahrhinweises auf der Kombianzeige 22 nachvollziehen kann, dass es sich um eine Information zu der Navigationsassistenz für das neu eingegebene Fahrziel XYZ handelt, wird in den Kraftfahrzeug 10 dem Fahrer signalisiert, dass sich die Applikationen 32 und 34 synchronisieren, d.h. dass die Applikation 32 auch tatsächlich Anweisungen für Fahrmanöver anzeigt, die zu dem neuen Fahrziel XYZ gehören.

Sobald die Anwendungen Daten austauschen, wird das optisch symbolisiert, indem z. B. ein Datenaustauschkennzeichen (Licht, Icon) sich von einer Anwendung zur anderen bewegt. Hierzu kann z.B. durch die Applikation 36 und das Scheibenwurzeldisplay 26 eine Signalisierungseinrichtung realisiert sein, welche den Datenaustausch des Informationspakets 44 zwischen den Anwendungen 34 und 32 symbolisiert.

In dem Scheibenwurzeldisplay 26 kann z.B. während der Eingabe des Fahrziels XYZ und der Bestätigung der Zieleingabe mittels des Bedienfelds 40 im Schritt S1 über dem Mittelkonsolenbildschirm 24 in dem Scheibenwurzeldisplay 26 ein Symbol 46, z.B. eine Welle, durch die Applikation 36 angezeigt werden. Mit dem Aussenden oder Übertragen des Informationspakets 44 durch die Applikation 34 an die Applikation 32 im Schritt S2 wird das Symbol 46 in dem Scheibenwurzeldisplay 26 z.B. durch eine fließende oder kontinuierliche Bewegung 48 in Richtung der Kombianzeige 22 bewegt. Zu einem späteren Zeitpunkt t2 erreicht das Symbol 46 hierdurch in dem Schritt S3 einen Bereich über der Kombianzeige 22.

Nachdem das Symbol 46 den Bereich über der Kombianzeige 22 erreicht, kann dann z.B. zu einem Zeitpunkt t3 durch die Applikation 32 in dem Schritt S4 in an sich bekannter Weise die Anzeige von Fahrhinweisen 50 (hier z.B. ein Fahrtrichtungspfeil und eine Entfernungsangabe) auf der Kombianzeige 22 begonnen werden. Dann kann auch auf dem Mittelkonsolenbildschirm 24 z.B. eine Straßenkarte angezeigt werden, auf welcher z.B. die Gesamtfahrroute markiert ist.

Der Fahrer konnte durch das sich bewegende Symbol 46 klar erkennen, dass die auf der Kombinanzeige 22 zum Zeitpunkt t3 erscheinenden Fahrhinweise ihren Ursprung oder ihre Quelle in der Routenberechnung für das zuvor auf dem Mittelkonsolenbildschirm 24 ausgewählten Fahrziel XYZ haben.

Eventuell möchte der Fahrer aber gar nicht, dass eine Anwendung einer anderen Daten zur Verfügung stellt. Insbesondere bei persönlichen Daten, wie z.B. Telefonnummern, Adressen oder Passwörtern, kann der Austausch zwischen beliebigen Applikationen unerwünscht sein. Z.B. kann es sinnvoll sein, dass ein bestimmter Anzeigeinhalt, z.B. ein Passwort, nicht auf jedem Bildschirm im Fahrgastraum 12 zu sehen ist.

Es kann daher vorgesehen sein, dass der Fahrer für alle oder für einzelne, auswählbare Applikationen z.B. in einem Konfigurationsmenü des Infotainmentsystem festlegen kann, dass von einer ausgewählten Applikation keine oder bestimmte Daten nicht an andere Applikationen ausgesendet oder von diesen empfangen werden darf.

Insgesamt ergibt sich bei dem Kraftfahrzeug 10 der Vorteil, dass der Benutzer mehr Intuition und Kontrolle bezüglich eines Datenaustauschs zwischen den im Kraftfahrzeug 10 ausgeführten Applikationen erhält.

## Patentansprüche

1. Kraftfahrzeug (10) mit zumindest einer Anzeigeeinrichtung (22, 24, 26), welche dazu ausgelegt ist, graphische Informationen (38, 40, 50) in einem Fahrgastraum (12) des Kraftfahrzeugs (10) anzuzeigen, und mit zumindest zwei graphischen Anwendungen (32, 34), welche jeweils dazu ausgelegt sind, unabhängig voneinander zu einem Informationsdatensatz (44) einen Anzeigeinhalt zu erzeugen und den Anzeigeinhalt mittels der zumindest einen Anzeigeeinrichtung (22, 24, 26) darzustellen, wobei die Anwendungen (32, 34) dazu ausgelegt sind, sich durch Austauschen des Informationsdatensatzes (44) oder durch gegenseitiges Hinweisen auf den Informationsdatensatz (44) zu synchronisieren, so dass zunächst eine der Anwendungen (34) zu dem Informationsdatensatz (44) ihren Anzeigeinhalt erzeugt und darstellt und dann (t4) eine andere der Anwendungen (32) zu dem Informationsdatensatz (44) ihren Anzeigeinhalt erzeugt und in einem anderen Bereich (22) im Fahrgastraum (12) darstellt,
**dadurch gekennzeichnet, dass**
eine Signalisierungseinrichtung (26, 36) bereitgestellt ist, welche dazu ausgelegt ist, zumindest ein von den Anzeigeinhalten verschiedenes optisches und/oder akustisches Signal (46) in dem Fahrgastraum (12) zu erzeugen, welches das Synchronisieren signalisiert.

2. Kraftfahrzeug (10) nach Anspruch 1, wobei zumindest zwei baulich voneinander getrennt angeordneten Anzeigeeinrichtungen (22, 24, 26) bereitgestellt sind und die Anwendungen (32, 34) ihre Anzeigeinhalte auf jeweils einer anderen der Anzeigeeinrichtung (22, 24, 26) anzuzeigen ausgelegt sind.

3. Kraftfahrzeug (10) nach einem der vorhergehenden Ansprüche, wobei die zumindest einer Anzeigeeinrichtung (22, 24, 26) zumindest eines aus den folgenden Elementen umfasst: ein Kombiinstrument (22), ein Scheibenwurzeldisplay (26), einen Bildschirm (24) in einer Mittelkonsole, einen Bildschirm in einem Armaturenbrett, ein Head-up-Display.

4. Kraftfahrzeug (10) nach einem der vorhergehenden Ansprüche, wobei die Signalisierungseinrichtung (26, 36) ein Leuchtsymbol (46) umfasst, das zum Erzeugen eines optischen Signals aufleuchtet und/oder blinkt und/oder seine Leuchtfarbe ändert.

5. Kraftfahrzeug (10) nach einem der vorhergehenden Ansprüche, wobei die Signalisierungseinrichtung (26, 36) dazu ausgelegt ist, eine sich im Fahrgastraum (12) bewegende Leuchterscheinung (46) zu erzeugen, welche durch ihre Bewegung (48) eine Richtung, in welche der Informationsdatensatz (44) ausgetauscht wird, anzeigt.

6. Kraftfahrzeug (10) nach einem der vorhergehenden Ansprüche, wobei die Signalisierungseinrichtung mehrere, in einer Reihe zwischen zwei Anzeigeeinrichtungen angeordnete Lampen umfasst und dazu ausgelegt ist, die Lampen der Reihe nach einzuschalten und/oder auszuschalten.

7. Kraftfahrzeug (10) nach einem der vorhergehenden Ansprüche, wobei die Signalisierungseinrichtung eine Projektionseinrichtung umfasst, welche dazu ausgelegt ist, einen Lichtpunkt und/oder ein Leuchtsymbol auf eine Oberfläche in dem Fahrtgastraum (12) zu projizieren.

8. Kraftfahrzeug (10) nach einem der vorhergehenden Ansprüche, wobei die Signalisierungseinrichtung (26, 36) ein Scheibenwurzeldisplay (26) umfasst und dazu ausgelegt ist, eine ortsveränderliche Leuchterscheinung (46) auf dem Scheibenwurzeldisplay (26) zu erzeugen, welche eine Richtung (48), in welche der Informationsdatensatz (44) ausgetauscht wird, signalisiert.

9. Kraftfahrzeug (10) nach einem der vorhergehenden Ansprüche, wobei die Signalisierungseinrichtung (26, 36) dazu ausgelegt ist, auf der zumindest einen Anzeigeeinrichtung (22, 26, 26) ein graphisches Symbol zu erzeugen, welches zu dem anderen Bereich (22) weist.

10. Verfahren zum Symbolisieren des Datenaustausches zwischen zumindest zwei Anwendungen (32, 34), von denen zunächst eine der Anwendungen (34) zu einem Informationsdatensatz (44) einen Anzeigeinhalt erzeugt und auf zumindest einer Anzeigeeinrichtung (24) eines Kraftfahrzeugs (10) darstellt und dann eine andere der Anwendungen (32) zu dem Informationsdatensatz (44) einen Anzeigeinhalt erzeugt und zumindest einer Anzeigeeinrichtung (22) darstellt, wobei sich die Anwendungen (32, 34) hierzu durch Austauschen des Informationsdatensatzes (44) oder durch gegenseitiges Hinweisen auf den Informationsdatensatz (44) synchronisiert werden und wobei durch eine Signalisierungseinrichtung (26, 36) in einem Fahrgastraum (12) des Kraftfahrzeugs (10) zumindest ein optisches Signal (46) erzeugt wird, welches das Synchronisieren signalisiert.

## Claims

1. Motor vehicle (10) having at least one display device (22, 24, 26) designed to display graphic information (38, 40, 50) in a passenger compartment (12) of the motor vehicle (10) and with at least two graphic applications (32, 34) which are designed to produce display contents with respect to an information data set (44) independently of each other and display the display contents by means of the at least one display device (22, 24, 26). The applications (32, 34) are designed to synchronise themselves during this process by exchanging the information data set (44) or by mutually referencing the information data set (44), such that first one of the applications (34) produces the display content of said application with respect to the information data set (44) and displays said display content and then (t4) another of the applications (32) produces the display content of said application with respect to the information data set (44) and displays said display content in another region (22) in the passenger compartment (12)
**characterised in that**:
a signalling device (26, 36) is prepared which is designed to produce at least one optical and/or acoustic signal (46) in the passenger compartment (12) which is different from the display contents and which signals the synchronisation.

2. Motor vehicle (10) according to claim 1, wherein two structurally separate display devices (22, 24, 26) are provided and the applications (32, 34) are designed to display their contents on the other display device (22, 24, 26) respectively.

3. Motor vehicle (10) according to any one of the previous claims, wherein the at least one display device (22, 24, 26) comprises at least one of the following elements: an instrument in the instrument cluster (22), a display at the base of the windscreen (26), a screen (24) in a centre console, a screen in a dashboard, and a head-up display.

4. Motor vehicle (10) according to any one of the previous claims, wherein the signalling device (26, 36) comprises an optical symbol (46) which in order to produce an optical signal lights up and/or flashes and/or changes the light colour.

5. Motor vehicle (10) according to any one of the previous claims, wherein the signalling device (26, 36) is designed to create an optical signal (46) moving in the passenger compartment (12), which through its movement (48) displays a direction in which the information data set (44) is being exchanged.

6. Motor vehicle (10) according to any one of the previous claims, wherein the signalling device comprises a plurality of lamps arranged between two display devices and is designed to switch the lamps on and/or off.

7. Motor vehicle (10) according to any one of the previous claims, wherein the signalling device comprises a projection device which is designed to project a light spot and/or a light symbol onto a surface in the passenger compartment (12).

8. Motor vehicle (10) according to any one of the previous claims, wherein the signalling device (26, 36) comprises a display at the base of the windscreen (26) and is designed to generate a movable optical signal (46) on the display at the base of the windscreen (26) which indicates a direction (48) in which the information data set (44) is being exchanged.

9. Motor vehicle (10) according to any one of the previous claims, wherein the signalling device (26, 36) is designed to generate on the at least one display device (22, 26, 26) a graphic symbol which points towards the other region (22).

10. Method for the symbolising of the data exchanges between at least two applications (32, 34), of which initially one of the applications (34) based on an information data set (44) produces display contents and displays it on at least one display device (24) of a motor vehicle (10) and then another of the applications (32) based on the information data set (44) produces display contents and displays it at least one display device (22), wherein the applications (32, 34) synchronise themselves for this purpose by exchanging the information data set (44) or by mutually referencing the information data set (44) and wherein through a signalling device (26, 36) in one passenger compartment (12) of the motor vehicles (10) at least one optical signal (46) is generated which indicates the synchronisation.

## Revendications

1. Véhicule automobile (10) avec au moins un dispositif d'affichage (22, 24, 26), qui est conçu pour afficher des informations graphiques (38, 40, 50) dans un habitacle de véhicule (12) du véhicule automobile (10), et avec au moins deux applications graphiques (32, 34), qui sont conçues chacune pour produire indépendamment l'une de l'autre un contenu d'affichage correspondant à un jeu de données d'information (44) et pour présenter le contenu d'affichage au moyen de l'au moins un dispositif d'affichage (22, 24, 26), lesquelles applications (32, 34) sont conçues pour se synchroniser en échangeant le jeu de données d'information (44) ou en s'informant mutuellement du jeu de données d'information (44) de telle sorte que dans un premier temps l'une des applications (34) produit son contenu d'affichage à partir du jeu de données d'information (44) et le présente et que dans un deuxième temps (t4) l'autre application (32) produit son contenu d'affichage à partir du jeu de données d'information (44) et le présente dans une autre zone (22) dans l'habitacle de véhicule (12),
**caractérisé en ce qu'**il est prévu un dispositif de signalisation (26, 36) qui est conçu pour produire dans l'habitacle de véhicule (12) au moins un signal (46) optique et/ou acoustique qui est différent des contenus d'affichage et qui signale la synchronisation.

2. Véhicule automobile (10) selon la revendication 1, dans lequel au moins deux dispositifs d'affichage (22, 24, 26) agencés séparément l'un de l'autre sont prévus et les applications (32, 34) sont conçues pour afficher leurs contenus d'affichage à chaque fois sur un autre dispositif d'affichage (22, 24, 26).

3. Véhicule automobile (10) selon l'une quelconque des revendications précédentes, dans lequel l'au moins un dispositif d'affichage (22, 24, 26) comprend au moins l'un des éléments suivants : un tableau de bord (22), un affichage de bas de pare-brise (26), un écran (24) dans une console centrale, un écran dans un tableau de bord, un affichage tête-haute.

4. Véhicule automobile (10) selon l'une quelconque des revendications précédentes, dans lequel le dispositif de signalisation (26, 36) comprend un symbole lumineux (46) qui est allumé et/ou clignote et/ou change de couleur pour produire un signal optique.

5. Véhicule automobile (10) selon l'une quelconque des revendications précédentes, dans lequel le dispositif de signalisation (26, 36) est conçu pour produire un phénomène lumineux (46) qui se déplace dans l'habitacle de véhicule (12) et qui indique par son déplacement (48) une direction dans laquelle le jeu de données d'information (44) est échangé.

6. Véhicule automobile (10) selon l'une quelconque des revendications précédentes, dans lequel le dispositif de signalisation comprend plusieurs lampes agencées en une rangée entre deux dispositifs d'affichage et est conçu pour allumer et/ou éteindre les lampes à tour de rôle.

7. Véhicule automobile (10) selon l'une quelconque des revendications précédentes, dans lequel le dispositif de signalisation comprend un dispositif de projection qui est conçu pour projeter un point lumineux et/ou un symbole lumineux sur une surface dans l'habitacle de véhicule (12).

8. Véhicule automobile (10) selon l'une quelconque des revendications précédentes, dans lequel le dispositif de signalisation (26, 36) comprend un affichage de bas de pare-brise (26) et est conçu pour produire sur l'affichage de bas de pare-brise (26) un phénomène lumineux à localisation variable (46) qui indique une direction (48) dans laquelle le jeu de données d'information (44) est échangé.

9. Véhicule automobile (10) selon l'une quelconque des revendications précédentes, dans lequel le dispositif de signalisation (26, 36) est conçu pour produire sur l'au moins un dispositif d'affichage (22, 26, 26) un symbole graphique qui pointe vers l'autre zone (22).

10. Procédé destiné à symboliser l'échange de données entre au moins deux applications (32, 34) dont dans un premier temps l'une des applications (34) produit un contenu d'affichage à partir du jeu de données d'information (44) et le présente sur au moins un dispositif d'affichage (24) d'un véhicule automobile (10) et dans un deuxième temps l'autre application (32) produit un contenu d'affichage à partir du jeu de données d'information (44) et le présente sur au moins un dispositif d'affichage (22), procédé dans lequel les applications (32, 34) se synchronisent à cet effet en échangeant le jeu de données d'information (44) ou en s'informant mutuellement du jeu de données d'information (44) et dans lequel au moins un signal optique (46) qui signale la synchronisation est produit par un dispositif de signalisation (26, 36) dans un habitacle de véhicule (12) du véhicule automobile (10).
